# EUROPEAN PATENT SPECIFICATION

(11) **EP 0 571 348 B1**
(45) Date of publication and mention of the grant of the patent: **20.09.1995**
(21) Application number: 93850107.9
(22) Date of filing: 18.05.1993
(51) Int. Cl.: A47J 42/56, A47J 43/046

(54) **A safety arrangement pertaining to food processing appliances**
Sicherheitsanordnung für nahrungsmittelbearbeitende Geräte
Agencement de sécurité pour appareils de traitement des aliments

(30) Priority: 22.05.1992 SE 9201626
(43) Date of publication of application: 24.11.1993
(73) Proprietor: AB HÄLLDE MASKINER, S-164 22 Kista (SE)
(72) Inventor: Sundquist, Jarl, S-191 41 Sollentuna (SE)
(74) Representative: Örtenblad, Bertil Tore

(56) References cited:
- EP-A- 0 013 805
- EP-A- 0 024 992
- DE-C- 840 431
- DE-C- 841 629
- DE-C- 937 627
- FR-A- 1 394 972
- FR-A- 2 370 456
- GB-A- 2 040 381
- US-A- 3 109 467

## Description

The present invention relates to a safety arrangement pertaining to food processing appliances.

Such food processing machines are of the kind in which the foodstuff or foodstuffs to be processed is/are placed in or pushed down into a container, in which a cutting tool is mounted at the bottom thereof. Such kitchen appliances are also provided with a lid which is intended to be fitted to the container when the appliance is to be used.

Appliances of this kind are available in designs intended for use in large industrial kitchens and also for domestic kitchens. A common feature of these appliances is that the cutting tool at the container bottom normally includes two knives which rotate at high speeds. The knives are sharp, and consequently it is necessary to construct the appliance so that the person using the appliance will be unable to reach the knives with his/her fingers, or hands, when the appliance is at work.

In the case of one known construction, the lid is provided with a wing-like member which projects out from the periphery of the lid and, which, when the lid is positioned correctly in relation to the container and to the appliance in general, operates a switch so that the appliance can be started. The drawback with this arrangement is that neither the lid nor the container can be rotated when the appliance is at work. Furthermore, in the case of food processors that are designed for use in large commercial kitchens, the need to twist the lid in order to bring it to its correct machine starting position is a troublesome task. Furthermore, the switch may break and therewith place the safety function out of action, although the appliance can still be used without the lid having been twisted to its correct, safe position. In this particular case, it is possible to remove the lid while the appliance is at work.

An object of the present invention is to provide a safety arrangement which will prevent the appliance from being used when the lid is incorrectly positioned on the container, and therewith make the appliance extremely safe. Another object of the invention is to provide a safety arrangement which will render it unnecessary for the lid to be brought to a given, fixed rotational position in relation to the container and to the appliance in general in order to be able to use the appliance.

DE-C-937627 describes another known construction. It is the primary object of the invention to provide a safety arrangement such that the appliance cannot be started simply, when no lid is fitted to the container.

These objects are realized by means of the present invention as claimed, which therewith solves the aforesaid problems.

Accordingly, the present invention relates to a safety arrangement in food processing cutting appliances of the kind which comprise a stand, a container which accommodates the foodstuff or foodstuffs to be prepared, a container lid, and one or more knives mounted at the bottom of the container and driven by a shaft which extends vertically up through the container bottom, wherein the stand includes an upstanding arm which when the appliance is positioned for use is rotatable about a vertical shaft, wherein the upper part of the arm is curved to form a horizontal, or generally horizontal part, which as the arm is rotated about its vertical rotational axis is rotated inwardly over the container lid to a given position thereon when the container and lid are placed on the appliance stand; said safety arrangement being characterised in that the arm is adapted to be moved vertically to a limited extent against the force exerted by a spring which strives to move the arm downwards; in that the level at which said given position on said lid when said container and the lid fitted thereto are placed on the stand is higher than that part of the horizontal part of said arm, before it is rotated inwards, which will come into contact with the upper surface of the lid as the arm is rotated inwards, wherewith the arm is moved vertically as it is rotated in over the lid; and in that when the horizontal arm part lies against the upper lid surface in the manner intended, the arm will be located in a predetermined rotational position in relation to the stand and also at a predetermined height position; and in that a switch is mounted in the stand adjacent the arm and is adapted to coact with said arm and to detect when the arm is located in said predetermined rotational position and height position, this arrangement being such that the switch is not activated, so as to enable the motor of the appliance to be started, until the arm is located in said predetermined position.

Another problem associated with the safety of such kitchen appliances is one of stopping rotation of the knives when the appliance is switched-off, so that the knives will be stationary before the lid has been removed from the container.

One known solution to this problem resides in applying a counter-current to the motor of the appliance with the aid of an electronic circuit as the appliance is switched-off by means of its switch, so as to quickly stop the motor and therewith the knives. In addition to the possibility of the electronic circuit malfunctioning, so that no counter-current is applied, another drawback with this solution is that if the container lid is removed without having switched-off the appliance with the aid of its switch, the electronic circuit will not be activated and consequently no counter-current will be applied. In this case, the knives will continue to rotate for some time, as the motor current is broken by activation of some form of safety device, such as the aforesaid switch which coacts with the lid.

According to a much preferred embodiment of the present invention, this problem is solved by stopping the motor quickly even though the appliance switch has not been activated prior to removing the lid.

In the case of this embodiment, the lower part of the arm Is provided with a camming curve which, as the arm is rotated, coacts with one end of a pivotally suspended lever rod whose other, opposite end is provided with a brake pad, wherein the lever rod can be moved by the camming curve between a first position in which the brake pad on the lever rod lies against the drive shaft of the appliance motor and a second position in which the brake pad lies remote from said drive shaft, and wherein the lever rod is moved from its second to its first position as the arm is rotated from its position against the lid to a position in which the arm lies remote from the upper lid surface.

The present invention will now be described in more detail with reference to exemplifying embodiments thereof and also with reference to the accompanying drawings, in which
- Figure 1 is a partially cut-away side view of a kitchen appliance with which the invention is applied;
- Figure 2 is a longitudinal sectional view of an arm belonging to the appliance shown in Figure 1;
- Figure 3 is a view from beneath of a motor belonging to said appliance;
- Figure 4 is a side view of a food mixer with which the invention is applied; and
- Figure 5 illustrates the mixer of Figure 4 from above.

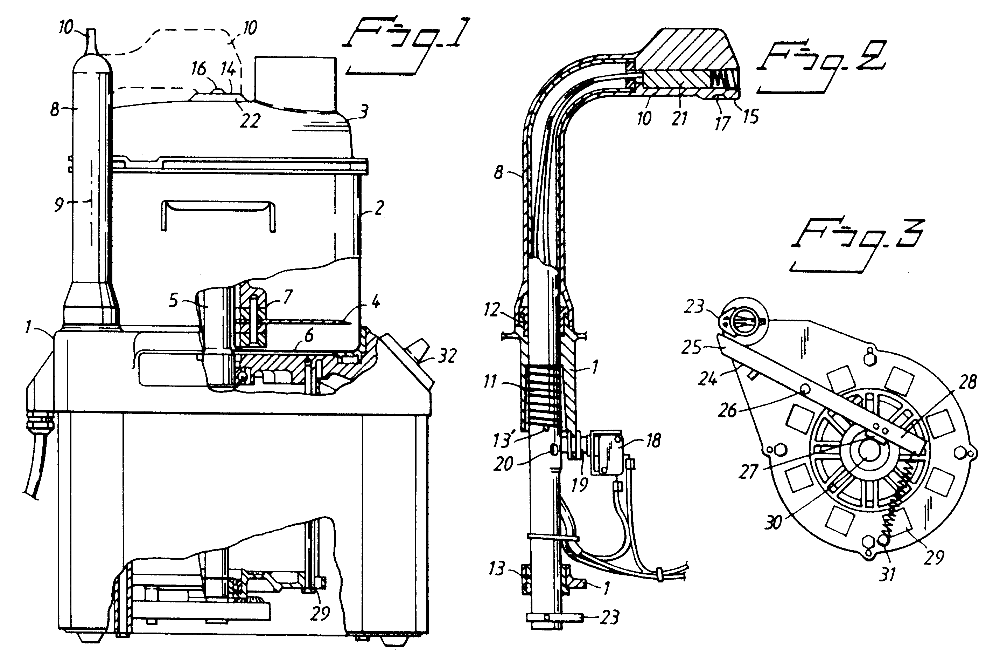

Figure 1 illustrates a food processing and cutting appliance which comprises a stand 1, a detachable container 2 which accommodates the foodstuff or foodstuffs to be prepared, and a container lid 3. Mounted on the container bottom are one or more knives 4 which are driven by a shaft 5 which projects vertically through the container bottom 6 and which drives a sleeve 7 on which the knives are fitted. The sleeve can be removed by lifting the sleeve upwardly from the shaft, whereafter the container can be removed from the appliance in general. Figure 1 is a partially cut-away view of the appliance.

Many different types of food processors of this kind are available commercially and the appliance illustrated in Figure 1 is of the kind used as a chopping or hacking appliance in large commercial kitchens, for instance.

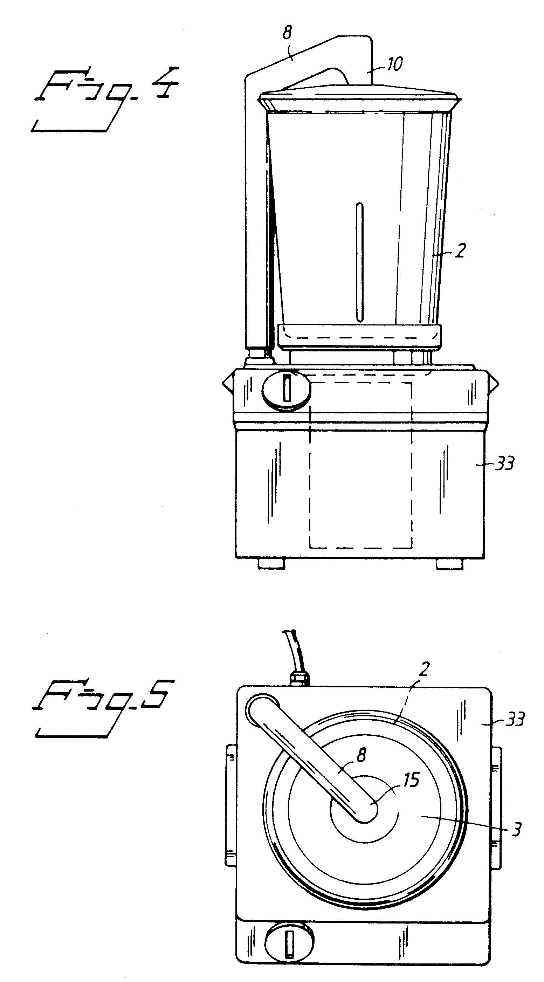

In accordance with the invention, the stand 1 includes an upstanding arm 8 which when the appliance is ready for use is rotatable about a vertical shaft 9. The upper part of the arm 8 is curved to include a horizontal, or generally horizontal part 10, which as the arm is rotated about its vertical shaft 9 is swung in over the container lid 3 to a determined position on the lid, when the container with lid fitted is placed on the stand 1. This last mentioned position of the horizontal arm part is indicated in ghost lines in Figure 1. Figure 1 shows the arm as seen from the left in Figure 2.

The arm is pivotally mounted in the stand 1 by means of sleeves 12, 13. The arm is preferably made of metal or a high grade plastic material.

The arm 8 can be moved vertically to a limited extent against the force exerted by a spring 11, which strives to move the arm downwards. The spring is mounted between a pin 13 on the arm 8 and the stand 1.

The lid 3 has a determined position 14 at which the underside 15 of the horizontal arm part shall lie against the lid when the arm is swung-in over the lid and positioned correctly relative thereto. The level at which said determined position 14 on the lid is located when said container with the lid fitted thereto is placed on the stand is, when the arm lies remote from the lid, higher than that part 15 of the horizontal arm part 10 which is intended to come into contact with the upper lid surface as the arm is swung inwards. The arm 8 will thus be moved vertically to some extent as it is swung-in over the lid 3.

According to one preferred embodiment of the invention, the predetermined position 14 on said lid 3 is located centrally on the highest point of the lid when fitted to the container 2.

When the horizontal arm part 10 lies against the upper side of the lid 3 in the manner intended, the arm is thus located in a predetermined position of rotation and in a predetermined height position relative to the stand. The fact that the arm is rotated to a predetermined rotational position and is moved to a predetermined height position is a highly essential feature of the invention. In order to provide a well-defined position of the arm in relation to the lid, the lid is preferably provided with an upstanding peg 16 which coacts with a corresponding recess 17 in the abutment surface 15 of said arm.

According to the present invention, a switch 18 is fitted to the stand 1 in the vicinity of the lower part of the arm. The switch 18 is intended to coact with the arm 8 and therewith detect when the arm is located in the predetermined rotational position and height position.

According to one preferred embodiment of the invention, the switch 18 includes an outwardly projecting pin 19 or some like device which coacts with a recess 20 provided in the outer surface of the arm. Thus, when the pin 19 is in register with the recess, the pin will project slightly down into the recess in the arm, therewith activating the switch so as to deliver current and enable the motor to be switched-on, by means of the appliance switch 32. Should the arm be swung away from the lid after having started the appliance, the switch 18 will no longer conduct current and the appliance will stop.

Naturally, other solutions for detecting the predetermined rotational position and height position are conceivable.

Thus, the appliance cannot be started until the arm has been moved in to a predetermined position over the lid. The appliance cannot be started simply by moving the arm in over a container to which no lid is fitted, since the arm will not then be lifted vertically. Furthermore, it is very difficult to maintain the arm in a position over a container to which no lid is fitted and therewith to hold the arm in both a correct rotational position and a correct height position, since the recess 20 which is to coact with the pin 19 of the switch 18 has roughly the same size as the outer end of the pin.

The necessity of detecting both the rotational position of the arm and its height position thus affords a very high safety factor.

According to one greatly preferred embodiment of the invention, a sensor 21 is provided on that part 10 of the arm which is intended to lie against the lid, this sensor being intended to coact with that part 14 of the lid forming said predetermined position. The sensor 21 is intended to detect when the arm is located in said predetermined position relative to the lid.

According to one preferred embodiment of the invention, the sensor 21 is a known magnetic sensor which is intended to coact with a permanent magnet 22 placed in the lid 3 at said predetermined position 14. More specifically, the sensor will preferably be a so-called read switch which conducts current when activated by the field of a permanent magnet. The lid is provided with a permanent magnet 22 to this end.

Naturally, other types of sensors can be used, such as a photocell or a microswitch.

In the case of this particular embodiment, the switch 18 and the sensor 21 are connected to an electric circuit which is constructed so that current will only be supplied to the appliance motor when both the switch 18 and the sensor 21 indicate that the arm 8 is located in its predetermined position across the lid 3.

As before mentioned, the appliance cannot be started until the arm has been moved in over a lid to a predetermined position in relation thereto. It is not possible to start the appliance simply by moving the arm in over a container to which no lid is fitted, since the arm will then not be moved vertically. Furthermore, in the case of the latter embodiment, it is necessary to use a lid of the type intended, i.e. a lid which is provided with a permanent magnet. This embodiment of the present invention thus provides a particularly high safety factor with regard to unintentional user contact with rotating knives.

According to another highly preferred embodiment of the invention, the lower part of the arm 8 is provided with a camming curve 23 which is intended to coact with one end 25 of a lever rod 24 as the arm is rotated, this lever rod being pivotally suspended from a journal 26 and provided at its other, opposite end 28 with a brake pad 27, as seen in Figure 3.

The lever rod can be moved by the camming curve 23 between a first position, Figure 3, in which the brake pad 27 abuts the motor shaft 30 of the appliance motor and a second position in which the brake pad 27 is spaced from said shaft 30.

The lever rod is moved from the second to the first position as the arm is rotated from its predetermined position over the lid to a position in which the arm lies remote from said upper side of the lid. The appliance includes a spring 31 which strives to move the lever rod towards its first position with a force sufficient to achieve effective braking of the motor.

Thus, as soon as the arm is swung out from its predetermined position over the lid, rotation of the motor, and therewith rotation of the knives, is stopped immediately by the aforedescribed mechanical brake means. When the lid is finally removed, sufficient time will have lapsed from the moment of swinging away the arm for the knives to have stopped completely.

In this embodiment, the rotary movement of the arm is used to interrupt the supply current and also to bring the knives to a stop.

As will be understood, application of the present invention is not limited to appliances of the illustrated and described kind, but can be applied also with other kinds of appliances. Figures 4 and 5 illustrate schematically a food mixer 33 of known kind in which knives are mounted on the bottom of the container 2 and in which the knives are driven by a drive shaft which extends downwardly from the container bottom. The illustrated container 2 is also fitted with a lid 3. A mixer of this kind may advantageously be provided with an arm 8 having the aforedescribed construction and function.

It will also be understood that the present invention is not restricted to the aforedescribed and illustrated embodiments thereof and that modifications can be made within the concept of the invention.

The present invention shall not therefore be considered restricted to the aforedescribed embodiments, since modifications can be made within the scope of the following Claims.

## Claims

1. A safety arrangement in food processing cutting appliances of the kind which comprise a stand, a container which accommodates the foodstuff or foodstuffs to be prepared, a container lid, and one or more knives mounted at the bottom of the container and driven by a shaft which extends vertically up through the container bottom, wherein the stand (1) includes an upstanding arm (8) which when the appliance is positioned for use is rotatable about a vertical shaft (9), wherein the upper part of the arm (8) is curved to form a horizontal, or generally horizontal part (10), which as the arm is rotated about its vertical rotational axis (9) is rotated inwardly over the container lid (3) to a given position (14) thereon when the container and lid are placed on the appliance stand (1); **characterized** in that the arm (8) is adapted to be moved vertically to a limited extent against the force exerted by a spring (11) which strives to move the arm downwards; in that the level at which said given position (14) on said lid (3) when said container and the lid fitted thereto are placed on the stand is higher than that part (15) of the horizontal part (10) of said arm (8), before it is rotated inwards, which will come into contact with the upper surface of the lid (3) as the arm is rotated inwards, wherewith the arm is moved vertically as it is rotated in over the lid; in that when the horizontal arm part (15) lies against the upper lid surface in the manner intended, the arm (8) will be located in a predetermined rotational position in relation to the stand (1) and also at a predetermined height position; and in that a switch (18) is mounted in the stand adjacent the arm and is adapted to coact with said arm (8) and to detect when the arm is located in said predetermined rotational position and height position, this arrangement being such that the switch is not activated, so as to enable the motor of the appliance to be started, until the arm is located in said predetermined position.

2. An arrangement according to Claim 1, **characterized** in that a sensor (21) is provided on that part (10) of the arm (8) which is intended to lie against the lid (3); in that the sensor (21) is intended to coact with that part (14) of the lid which forms said predetermined position, wherein the sensor (21) is intended is detected in conjunction with the aid of the lid (21), when the arm (8) is located in said predetermined position relative to said lid; and in that the switch (18) and the sensor (21) are connected to an electric circuit which is so constructed that supply current will only be delivered to the motor (29) of said appliance when both the switch and the sensor indicate that the arm is located in its predetermined position over the lid.

3. An arrangement according to Claim 1 or 2, **characterized** in that the lower part of the arm (8) is provided with a camming curve (23) which, as the arm (8) is rotated, coacts with one end (25) of a lever rod (24) which is pivotally suspended and which is provided at its other, opposite end with a brake pad (27); in that the lever rod can be moved by the camming curve between a first position in which the brake pad (27) on the lever rod (24) is in abutment with the drive shaft (30) of the appliance motor (29), and a second position in which the brake pad (27) lies remote from the shaft (30); and in that the lever rod is arranged to be moved from the second to the first position as said arm (8) is rotated from its position over the lid (3) to a position in which the arm (8) no longer abuts the upper surface of the lid under the action of a spring (19) which strives to move the lever rod (24) to its first position.

4. An arrangement according to Claim 1, 2 or 3, **characterized** in that the switch (18) includes an outwardly projecting pin (19) or like device which coacts with a recess (20) in the outer surface of the arm (8).

5. An arrangement according to Claim 1, 2, 3 or 4, **characterized** in that the sensor (21) is a magnetic sensor which is intended to coact with a permanent magnet (22) located in the lid (3) at said predetermined position (14).

6. An arrangement according to any one of the preceding Claims, **characterized** in that the predetermined position (14) on said lid is located centrally of the highest point of the lid when said lid is fitted to the container (2).

## Patentansprüche

1. Sicherheitsanordnung für nahrungsmittelbearbeitende Schneidgeräte der Art, die ein Gestell, einen Behälter, der das/die zu bearbeitende/n Lebensmittel aufnimmt, einen Behälterdeckel und eines oder mehrere Messer aufweist, die an dem Boden des Behälters angeordnet und durch eine Welle angetrieben sind, die sich lotrecht nach oben durch den Behälterboden erstreckt, wobei das Gestell (1) einen nach oben ragenden Arm (8) aufweist, der, wenn das Gerät zur Benutzung angeordnet ist, um eine lotrechte Welle (9) drehbar ist, wobei der obere Teil des Arms (8) gekrümmt ist, um einen waagerechten oder im wesentlichen waagerechten Teil (10) zu bilden, der, wenn der Arm um seine lotrechte Drehachse (9) verdreht wird, nach innen über den Behälterdeckel (3) in eine vorgegebene Stellung (14) darüber verschwenkt wird, wenn der Behälter und der Deckel auf das Gestell (1) des Geräts aufgesetzt sind, **dadurch gekennzeichnet,** daß der Arm (8) so ausgebildet ist, daß er lotrecht um einen begrenzten Betrag gegen die durch eine Feder (11) ausgeübte Kraft bewegbar ist, die danach strebt, den Arm nach unten zu bewegen, daß das Niveau, an dem die vorgegebene Stellung (14) über dem Deckel (3) vorliegt, wenn der Behälter und der darauf aufgesetzte Deckel auf das Gestell aufgesetzt sind, höher ist als derjenige Teil (15) des waagerechten Teils (10) des Armes (8), bevor dieser nach innen verschwenkt ist, der mit der oberen Oberfläche des Deckels (3) in Berührung kommt, wenn der Arm nach innen verschwenkt wird, wobei der Arm lotrecht bewegt wird, wenn er nach innen über den Deckel verschwenkt wird, daß, wenn der waagerechte Armteil (15) gegen die obere Deckeloberfläche in der vorgesehenen Weise anliegt, der Arm (8) in einer vorbestimmten Schwenkstellung in bezug auf das Gestell (1) und auch in einer vorbestimmten Höhenstellung angeordnet ist, und daß ein Schalter (18) in dem Gestell benachbart zu dem Arm angebracht und ausgebildet ist, um mit dem Arm (8) zusammenzuwirken und festzustellen, wenn der Arm sich in der vorbestimmten Schwenkstellung und Höhenstellung befindet, wobei diese Anordnung so getroffen ist, daß der Schalter nicht aktiviert wird, um so ein Starten des Motors des Geräts zu ermöglichen, bis der Arm in der vorbestimmten Stellung angeordnet ist.

2. Anordnung nach Anspruch 1, **dadurch gekennzeichnet,** daß ein Fühler (21) an demjenigen Teil (10) des Arms (8) vorgesehen ist, der dazu bestimmt ist, gegen den Deckel (3) anzuliegen, daß der Fühler (21) dazu bestimmt ist, mit demjenigen Teil (14) des Deckels zusammenzuwirken, der die vorbestimmte Stellung bildet, wobei der Fühler (21) dazu bestimmt ist, in Verbindung mit der Hilfe des Deckels (3) festzustellen, wenn der Arm (8) sich in der vorbestimmten Stellung relativ zu dem Deckel befindet, und daß der Schalter (18) und der Fühler (21) mit einem elektrischen Stromkreis verbunden sind, der so konstruiert ist, daß Versorgungsstrom zu dem Motor (29) des Gerätes nur zugeführt wird, wenn sowohl der Schalter als auch der Fühler anzeigen, daß der Arm sich in seiner vorbestimmten Stellung über dem Deckel befindet.

3. Anordnung nach Anspruch 1 oder 2, **dadurch gekennzeichnet,** daß der untere Teil des Arms (8) mit einer Nockenkurve (23) versehen ist, die, wenn der Arm (8) verschwenkt wird, mit einem Ende (25) einer Hebelstange (24) zusammenwirkt, die gelenkig aufgehängt ist und die an ihrem anderen, entgegengesetzten Ende mit einer Bremsfläche (27) versehen ist, daß die Hebelstange durch die Nockenkurve zwischen einer ersten Stellung, in der die Bremsfläche (27) an der Hebelstange (24) in Anlage mit der Antriebswelle (30) des Gerätemotors (29) ist, und einer zweiten Stellung bewegt werden kann, in der die Bremsfläche (27) entfernt von der Welle (30) liegt, und daß die Hebelstange so angeordnet ist, daß sie von der zweiten zu der ersten Stellung bewegt werden kann, wenn der Arm (8) von seiner Stellung über dem Deckel (3) in eine Stellung verschwenkt wird, in der der Arm (8) nicht länger an der oberen Oberfläche des Deckels unter der Wirkung der Feder (19) anliegt, die danach strebt, die Hebelstange (24) in ihre erste Stellung zu bewegen.

4. Anordnung nach Anspruch 1, 2 oder 3, **dadurch gekennzeichnet,** daß der Schalter (18) einen nach außen vorragenden Stift (19) oder eine ähnliche Vorrichtung aufweist, der bzw. die mit einer Ausnehmung (20) in der äußeren Oberfläche des Arms (8) zusammenwirkt.

5. Anordnung nach Anspruch 1, 2, 3 oder 4, **dadurch gekennzeichnet,** daß der Fühler (21) ein magnetischer Fühler ist, der dazu bestimmt ist, mit einem Permanentmagneten (22) zusammenzuwirken, der auf dem Deckel (3) an der vorbestimmten Stellung (14) angeordnet ist.

6. Anordnung nach einem der vorhergehenden Ansprüche, **dadurch gekennzeichnet,** daß die vorbestimmte Stellung (14) an dem Deckel zentral an dem höchsten Punkt des Deckels angeordnet ist, wenn der Deckel auf den Behälter (2) aufgesetzt ist.

## Revendications

1. Agencement de sécurité pour appareils de traitement des aliments, du type comprenant un socle, un récipient destiné à recevoir le ou les produits alimentaires à préparer, un couvercle de récipient, et un ou plusieurs couteaux montés dans le fond du récipient et entraînés par un arbre montant verticalement à travers le fond du récipient, le socle (1) comprenant un bras dressé verticalement (8) qui, lorsque l'appareil est placé en position d'utilisation, peut tourner autour d'un arbre vertical (9), la partie supérieure du bras (8) étant courbée pour former une partie horizontale ou généralement horizontale (10) qui, lorsqu'on fait tourner l'arbre autour de son axe de rotation verticale (9), tourne vers l'intérieur pour venir au-dessus du couvercle de récipient (3) dans une position donnée (14) sur celui-ci lorsque le récipient et le couvercle sont placés sur le socle (1) de l'appareil ; agencement de sécurité caractérisé en ce que le bras (8) est conçu pour se déplacer verticalement avec un amplitude limitée, contre la force exercée par un ressort (11) qui s'efforce de déplacer le bras vers le bas ; en ce que le niveau où la position donnée (14) sur le couvercle (3) lorsque le récipient et le couvercle adapté sur celui-ci sont placés sur le socle, est plus haut que le niveau ou la partie (15) de la partie horizontale (10) du bras (8), avant sa rotation vers l'intérieur, doit venir en contact avec la surface supérieure du couvercle (3) lorsqu'on fait tourner le bras vers l'intérieur, de façon que le bras soit déplacé verticalement lorsqu'on le fait tourner pour l'amener au-dessus du couvercle ; en ce que, lorsque la partie de bras horizontale (15) vient contre la surface supérieure du couvercle de la manière voulue, le bras (8) doit venir se placer dans une position de rotation prédéterminée par rapport au socle (1), et également dans une position de hauteur prédéterminée ; et en ce qu'un commutateur (18) est monté dans le socle au voisinage du bras et est destiné à coopérer avec ce bras (8) pour détecter le moment où le bras est placé dans la position de rotation prédéterminée et dans la position de hauteur prédéterminée, cette disposition étant telle que le commutateur ne soit pas activé, pour permettre le démarrage du moteur de l'appareil, avant que le bras soit placé dans la position prédéterminée.

2. Agencement selon la revendication 1, caractérisé en ce qu'un détecteur (21) est monté sur la partie (10) du bras (8) qui est destiné à s'appuyer contre le couvercle (3) ; en ce que le détecteur (21) est destiné à coopérer avec la partie (14) du couvercle qui forme la position prédéterminée, le détecteur (21) étant destiné à détecter, en association avec le couvercle (21), le moment où le bras (8) est placé dans la position prédéterminée par rapport au couvercle ; et en ce que le commutateur (18) et le détecteur (21) sont connectés à un circuit électrique conçu pour que le courant d'alimentation ne soit fourni au moteur (29) de l'appareil que lorsque le commutateur et le détecteur indiquent tous les deux que le bras est placé dans sa position prédéterminée au-dessus du couvercle.

3. Agencement selon la revendication 1 ou 2, caractérisé en ce que la partie inférieure du bras (8) est munie d'une courbe de came (23) qui, lorsqu'on fait tourner le bras (8), coopère avec une extrémité (25) d'une tige de levier (24) montée en pivotement et munie d'un patin de frein (27) à son autre extrémité opposée ; en ce que la tige de levier peut être déplacée par la courbe de came entre une première position dans laquelle le patin de frein (27) de la tige de levier (24) est en butée contre l'arbre d'entraînement (30) du moteur (29) de l'appareil, et une seconde position dans laquelle le patin de frein (27) est écarté de l'arbre (30) ; et en ce que la tige de levier est disposée pour passer de la seconde position à la première position lorsqu'on fait tourner le bras (8) de sa position au-dessus du couvercle (3) vers une position dans laquelle le bras (8) ne bute plus contre la surface supérieure du couvercle, sous l'action d'un ressort (19) qui s'efforce de déplacer la tige de levier (24) vers sa première position.

4. Agencement selon la revendication 1, 2 ou 3, caractérisé en ce que le commutateur (18) comprend une tige en saillie vers l'extérieur (19) ou autre dispositif analogue, qui coopère avec une cavité (20) formée dans la surface extérieure du bras (8).

5. Agencement selon la revendication 1, 2, 3 ou 4, caractérisé en ce que le détecteur (21) est un détecteur magnétique qui est destiné à coopérer avec un aimant permanent (22) placé dans le couvercle (3) dans la position prédéterminée (14).

6. Agencement selon l'une quelconque des revendications précédentes, caractérisé en ce que la position prédéterminée (14) sur le couvercle est placée au centre du point le plus haut du couvercle lorsque ce couvercle est adapté sur le récipient (2).
